(19) Europäisches Patentamt
European Patent Office
Office européen des brevets

(11) EP 4 768 841 A1

(12) **DEMANDE DE BREVET EUROPEEN**

(43) Date de publication:
01.07.2026 Bulletin 2026/27

(21) Numéro de dépôt: 25226671.3

(22) Date de dépôt: 23.12.2025

(51) Classification Internationale des Brevets (IPC):
*F28F 7/02* (2006.01)    *F28D 7/02* (2006.01)
*B33Y 80/00* (2015.01)    *F28F 9/22* (2006.01)
*B33Y 10/00* (2015.01)

(52) Classification Coopérative des Brevets (CPC):
**B33Y 80/00; B33Y 10/00; F28D 7/022; F28F 7/02;**
F28F 2009/228

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH LA MA MD TN**

(30) Priorité: **26.12.2024 FR 2415271**

(71) Demandeur: **Nexson Group - Industry
58600 Garchizy (FR)**

(72) Inventeur: **BONNAFOUS, Charles
58640 VARENNES-VAUZELLES (FR)**

(74) Mandataire: **Regimbeau
20, rue de Chazelles
75847 Paris Cedex 17 (FR)**

(54) **ECHANGEUR THERMIQUE AVEC UN DOUBLE DÉFLECTEUR DEMI-HÉLICOÏDAL**

(57) Echangeur thermique (1) comprenant un corps d'échangeur (2) et une paroi séparatrice (21) séparant un premier réseau de canaux (22) pour une circulation d'un premier fluide (A) depuis une première entrée (32) jusqu'à une première sortie (42), et un deuxième réseau de canaux (23) pour une circulation d'un deuxième fluide (B) depuis une deuxième entrée (43) jusqu'à une deuxième sortie (33), caractérisé en ce qu'il comprend en outre un premier déflecteur (24) comprenant une première paroi de déflecteur demi-hélicoïdale, agencée à l'intérieur des canaux du premier réseau de canaux (22) et propre à guider la circulation du premier fluide (A) selon une première trajectoire hélicoïdale, et un deuxième déflecteur (25) comprenant une deuxième paroi de déflecteur demi-hélicoïdale, agencée à l'intérieur des canaux du deuxième réseau de canaux (23) et propre à guider la circulation du deuxième fluide (B) selon une deuxième trajectoire hélicoïdale.

**FIG. 2**

EP 4 768 841 A1

## Description

### DOMAINE TECHNIQUE

La présente divulgation se rapporte au domaine général des échangeurs thermiques.

### ETAT DE LA TECHNIQUE

Les échangeurs thermiques sont des dispositifs conçus pour transférer de la chaleur entre deux fluides (liquides ou gaz) sans qu'ils ne se mélangent. Les deux fluides circulant à travers l'échangeur thermique sont séparés par une paroi solide à travers laquelle a lieu le transfert de chaleur. De tels dispositifs sont utilisés dans divers systèmes industriels, tels que les centrales électriques, les systèmes de chauffage, de ventilation, de climatisation, ou encore dans l'industrie chimique. Différents types d'échangeurs thermiques peuvent être utilisés.

Le dimensionnement des échangeurs thermiques prend en compte les besoins thermiques, c'est-à-dire la quantité de chaleur à transférer entre les deux fluides, en fonction des températures d'entrée et de sortie souhaitées pour chaque fluide. Les caractéristiques des fluides, notamment leur vitesse d'écoulement, leur viscosité, ou leur corrosivité, sont également à considérer dans le choix du type d'échangeur thermique adapté. L'efficacité des échangeurs thermiques dépend principalement de la surface de contact ou surface d'échange de la paroi séparant les fluides, et du choix des matériaux utilisés. De plus, il est crucial de considérer les pertes de charge engendrées par l'écoulement des fluides à travers l'échangeur thermique, car une perte de charge trop importante pourrait nécessiter des pompes plus puissantes pour mettre les fluides en mouvement, augmentant ainsi les coûts énergétiques et économiques pour les utilisateurs.

Dans les échangeurs à plaques, des déflecteurs sont utilisés pour dévier les écoulements de fluide, limiter les zones mortes et assurer la bonne distribution du fluide dans tous les canaux. Cela conduit à l'augmentation de la performance mais aussi à des pertes de charge importantes et une inhomogénéité des vitesses d'écoulement qui rend ces dispositifs peu performants et volumineux.

Selon les besoins de l'utilisateur, une alternative aux échangeurs à plaques est d'utiliser des échangeurs de chaleur coque et tube (ou *"shell and tube"*). Il s'agit d'échangeurs cylindriques comprenant une paroi hélicoïdale et des tubes droits s'étendant parallèlement à l'axe de la paroi hélicoïdale et passant au travers de la paroi hélicoïdale. Un premier fluide s'écoule à travers l'échangeur thermique en étant guidé par la paroi hélicoïdale, selon une trajectoire hélicoïdale, tandis qu'un deuxième fluide s'écoule dans les tubes droits. Un tel échangeur thermique est par exemple décrit dans CN101363694A. L'utilisation de la paroi hélicoïdale permet de limiter le volume occupé par le premier fluide dans l'échangeur et donc d'augmenter sa vitesse et donc le transfert thermique avec le deuxième fluide. Toutefois, il n'est pas possible de maitriser la vitesse d'écoulement du deuxième fluide dans ce dispositif avec des déflecteurs (ou "baffle" selon la terminologie anglosaxonne), la section de passage du deuxième fluide étant contrainte par les dimensions des tubes.

Les progrès récents des méthodes de fabrication additive ont permis d'envisager l'utilisation de parois séparatrices générées par des surfaces minimales triplement périodiques, afin de maximiser la surface d'échange en réduisant la quantité de matière utilisée. Toutefois, les échangeurs thermiques incluant une telle paroi séparatrice ne permettent pas de contrôler suffisamment précisément les augmentations ou diminutions de vitesses des fluides dans l'échangeur thermique.

### EXPOSE DE L'INVENTION

Un but de la présente divulgation est de proposer un échangeur thermique compact présentant une surface d'échange importante tout en limitant les pertes de charge, et permettant de contrôler indépendamment les vitesses des fluides dans l'échangeur.

Ce but est atteint par un échangeur thermique comprenant un corps d'échangeur, le corps d'échangeur comprenant une première entrée de fluide, une deuxième entrée de fluide, une première sortie de fluide et une deuxième sortie de fluide ; et une paroi séparatrice séparant un premier réseau de canaux pour une circulation d'un premier fluide depuis la première entrée jusqu'à la première sortie, et un deuxième réseau de canaux pour une circulation d'un deuxième fluide depuis la deuxième entrée jusqu'à la deuxième sortie, l'échangeur thermique étant caractérisé en ce qu'il comprend en outre un premier déflecteur comprenant une première paroi de déflecteur demi-hélicoïdale, agencée à l'intérieur des canaux du premier réseau de canaux et propre à guider la circulation du premier fluide selon une première trajectoire hélicoïdale, et un deuxième déflecteur comprenant une deuxième paroi de déflecteur demi-hélicoïdale, agencée à l'intérieur des canaux du deuxième réseau de canaux et propre à guider la circulation du deuxième fluide selon une deuxième trajectoire hélicoïdale.

L'utilisation de déflecteurs hélicoïdaux permet d'augmenter la vitesse de chacun des deux fluides dans l'échangeur et donc d'augmenter le transfert thermique. L'échangeur thermique peut donc être plus compact, à performance égale. Il permet de traiter des fluides à très basse vitesse ou des fluides ayant des vitesses très différentes, par exemple entre le premier fluide chaud et le deuxième fluide froid, en exploitant l'intégralité du volume disponible. En effet, dans de nombreux cas, il n'est pas possible d'augmenter la section de l'échangeur, notamment la largeur et/ou hauteur de l'échangeur, sans faire diminuer drastiquement les vitesses des fluides et donc le coefficient d'échange. L'utilisation des déflecteurs hélicoïdaux permet de garantir une certaine vitesse même lorsque la section de l'échangeur est grande.

La forme hélicoïdale permet de ne pas créer de pertes de charges importantes, contrairement aux déflecteurs utilisés pour les échangeurs thermiques à plaques, dans lesquels le retournement du fluide provoque un « cisaillement » du fluide important qui implique des pertes de charges inutiles, qui sont évitées dans la solution proposée.

Chaque déflecteur peut être intégré indépendamment à chaque réseau de canaux sans impacter l'écoulement du fluide dans l'autre réseau de canaux. L'utilisation des déflecteur demi-hélicoïdaux permet de moduler indépendamment la section de passage de chaque fluide à travers l'échangeur thermique. L'échangeur thermique proposé présente ainsi un équilibre entre un bon coefficient d'échange thermique, une surface d'échange importante et une perte de charge acceptable.

L'invention est avantageusement complétée par les caractéristiques suivantes, prises individuellement ou en l'une quelconque de leurs combinaisons techniquement possibles :

- la première paroi de déflecteur demi-hélicoïdale a un axe principal, et la deuxième paroi de déflecteur demi-hélicoïdale a pour axe l'axe principal ;

- la première paroi de déflecteur demi-hélicoïdale est orientée dans un premier sens d'enroulement autour de l'axe principal, et la deuxième paroi de déflecteur demi-hélicoïdale est orientée dans un deuxième sens d'enroulement autour de l'axe principal, le deuxième sens d'enroulement étant opposé au premier sens d'enroulement ;

- la première paroi de déflecteur demi-hélicoïdale présente un premier pas, et la deuxième paroi de déflecteur demi-hélicoïdale présente un deuxième pas, le deuxième pas étant différent du premier pas ;

- la première paroi de déflecteur demi-hélicoïdale a un premier axe et s'étend sur une première longueur le long du premier axe, et la première paroi de déflecteur demi-hélicoïdale présente un premier pas qui varie le long du premier axe sur la première longueur ;

- la deuxième paroi de déflecteur demi-hélicoïdale a un deuxième axe et s'étend sur une deuxième longueur le long du deuxième axe, et la deuxième paroi de déflecteur demi-hélicoïdale présente un deuxième pas qui varie sur la deuxième longueur ;

- la paroi séparatrice comprend une structure en treillis, de sorte que le premier réseau de canaux et le deuxième réseau de canaux sont imbriqués l'un dans l'autre ;

- la paroi séparatrice présente une surface minimale triplement périodique, par exemple en forme de gyroïde ;

- le corps d'échangeur est de forme cylindrique s'étendant entre une première base et une deuxième base, et la première entrée et la deuxième sortie sont agencées sur la première base, la première sortie et la deuxième entrée étant agencées sur la deuxième base ;

- la paroi séparatrice, la première paroi de déflecteur demi-hélicoïdale et la deuxième paroi de déflecteur demi-hélicoïdale sont obtenues par un procédé de fabrication additive.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 est une vue éclatée d'un échangeur thermique selon un mode de réalisation.

La figure 2 est une vue en coupe du corps d'échangeur de l'échangeur thermique de la figure 1.

La figure 3 est une vue en coupe des déflecteurs du corps d'échangeur de la figure 2.

La figure 4 est une vue de côté de deux déflecteurs demi-hélicoïdaux de pas différents.

La figure 5 est une vue en coupe d'un corps d'échangeur avec des déflecteurs de pas variables.

La figure 6 est une vue de côté des déflecteurs demi-hélicoïdaux de la figure 5.

Sur l'ensemble des figures, les éléments similaires portent des références identiques.

**DESCRIPTION DETAILLEE DE L'INVENTION**

L'échangeur thermique 1 représenté comprend un corps d'échangeur 2 et des collecteurs 3,4.

*Structure de l'échangeur thermique*

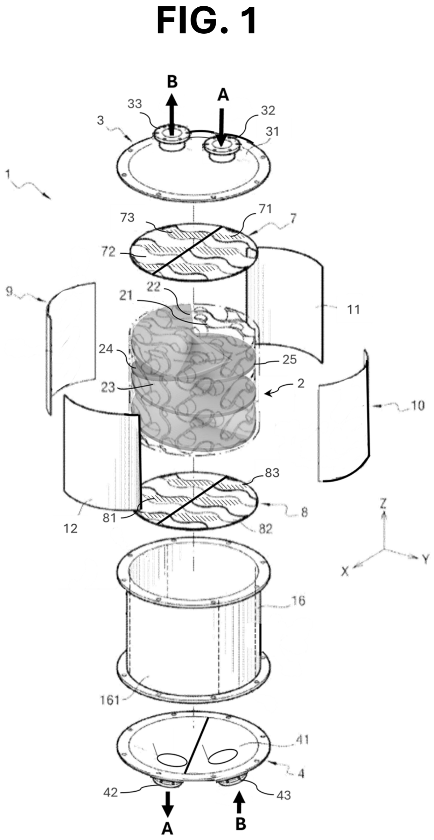

Dans le mode de réalisation illustré sur la figure 1, le corps d'échangeur 2 est délimité par un cylindre de révolution. Le cylindre de révolution présente un axe Z de révolution. Le cylindre comprend une surface cylindrique et deux faces transversales 7 et 8 s'étendant chacune dans un plan orthogonal à l'axe Z, formant une première base 7 et une deuxième base 8 de la surface cylindrique.

Le corps d'échangeur 2 comprend une paroi séparatrice 21 séparant un premier réseau de canaux 22 pour la circulation d'un premier fluide A depuis une première entrée jusqu'à une première sortie, et un deuxième réseau de canaux 23 pour la circulation d'un deuxième fluide B depuis une deuxième entrée jusqu'à une deuxième sortie. Tous les canaux du premier réseau de canaux 22 communiquent entre eux. Tous les canaux du deuxième réseau de canaux 23 communiquent entre eux. Mais les canaux du premier réseau de canaux 22 ne communiquent pas avec les canaux du deuxième réseau de canaux 23, de sorte que les fluides circulant dans les deux réseaux ne se mélangent pas.

Dans le mode de réalisation de la figure 1, la première face ou base 7 constitue une surface d'entrée pour le premier fluide A et une surface de sortie pour le deuxième fluide B. La deuxième face ou base 8 constitue une surface de sortie pour le premier fluide A et une surface d'entrée pour le deuxième fluide B, opposées à leur surface d'entrée et sortie respective.

Le corps d'échangeur 2 comprend en outre une première paroi d'entrée 71 et une deuxième paroi d'entrée 83, une première paroi de sortie 81 et une deuxième paroi de sortie 73.

La première paroi d'entrée 71 et la première paroi de sortie 81 obturent les canaux du deuxième réseau de canaux 23 débouchant sur la première face 7 et sur la deuxième face 8.

De même, la deuxième paroi d'entrée 81 et la deuxième paroi de sortie 71 obturent les canaux du premier réseau de canaux 22 débouchant sur la première face 7 et sur la deuxième face 8.

A cet effet, la première paroi d'entrée 71 présente une série d'ouvertures 72 agencées de sorte à autoriser une circulation du premier fluide à travers la première face 7. La première paroi d'entrée 71 autorise la pénétration du premier fluide A à travers la première face 7 dans le premier réseau de canaux 22 tout en interdisant une pénétration du premier fluide à travers la première face 7 dans le deuxième réseau de canaux 23.

La première paroi de sortie 81 présente une série d'ouvertures de sortie 82 agencées de sorte à autoriser une circulation du premier fluide à travers la deuxième face 8. La première paroi de sortie 81 autorise une extraction du premier fluide A à travers la deuxième face 8 hors du premier réseau de canaux 22, tout en interdisant une extraction du deuxième fluide B à travers la deuxième face 8 hors du deuxième réseau de canaux 23.

Ainsi, le premier fluide A pénètre à l'intérieur du corps d'échangeur 2 via la première paroi d'entrée 71, circule dans les canaux du premier réseau de canaux 22, et sort du corps d'échangeur 2 via la première paroi de sortie 81.

De même, la deuxième paroi d'entrée 83 présente une série d'ouvertures 82 agencées de sorte à autoriser une circulation du deuxième fluide B à travers la deuxième face 8. La deuxième paroi d'entrée 83 autorise une pénétration du deuxième fluide B à travers la deuxième face 9 dans le deuxième réseau de canaux 23, tout en interdisant une pénétration du deuxième fluide B à travers la deuxième face 9 dans le premier réseau de canaux 22.

La deuxième paroi de sortie 73 présente une série d'ouvertures de sortie 72 agencées de sorte à autoriser une circulation du deuxième fluide B à travers la première face 7. La deuxième paroi de sortie 73 autorise une extraction du deuxième fluide B à travers la première face 7 hors du deuxième réseau de canaux 23, tout en interdisant une extraction du premier fluide A à travers la première face 7 hors du premier réseau de canaux 22.

Ainsi, le deuxième fluide B pénètre à l'intérieur du corps d'échangeur 2 via la deuxième face 8, circule dans les canaux du deuxième réseau de canaux 23, et sort du corps d'échangeur 2 via la première face 7.

Les collecteurs 3,4 incluent un premier collecteur 3, et un deuxième collecteur 4.

Le premier collecteur 3 est propre à guider le premier fluide A (par exemple un fluide froid) pour que le premier fluide circule à l'intérieur du corps d'échangeur 2 dans le premier réseau de canaux 22.

Le premier collecteur 3 forme une plaque d'extrémité supérieure. Il est fixé sur la première face 7 du corps d'échangeur 2. Le premier collecteur 3 comprend une paroi 31, une première tubulure d'entrée 32 propre à être raccordée à un premier conduit d'amenée du premier fluide A, et une deuxième tubulure de sortie 33 propre à être raccordée à un deuxième conduit de sortie du deuxième fluide B.

De même, le deuxième collecteur 4 est propre à guider le deuxième fluide B (par exemple un fluide chaud) pour que le deuxième fluide B circule à l'intérieur du corps d'échangeur 2 dans le deuxième réseau de canaux 23.

Le deuxième collecteur 4 forme une plaque d'extrémité inférieure. Il est fixé sur la deuxième face 8 du corps d'échangeur 2. Le deuxième collecteur 4 comprend une paroi 41, une première tubulure de sortie 42 propre à être raccordée à un premier conduit d'extraction du premier fluide, et une deuxième tubulure d'entrée 43 propre à être raccordée à un deuxième conduit d'amenée du deuxième fluide B.

L'échangeur thermique 1 comprend également une pluralité de parois de fermeture 9,10,11,12 s'étendant en périphérie du corps d'échangeur 2 de sorte à obturer à la fois les canaux du premier réseau de canaux 22 et les canaux du deuxième réseau de canaux 23.

L'échangeur thermique 1 comprend en outre un carter externe ou calandre 16 entourant le corps d'échangeur 2. La calandre 16 comprend une paroi 161 de forme générale cylindrique. La paroi 161 de la calandre 16 entoure le corps d'échangeur 2 et les parois de fermetures 9,10,11,12. La paroi 161 de la calandre 16 peut être fixée sur les parois de fermetures 9,10,11,12, par exemple par des lignes de soudure.

La première plaque d'extrémité ou collecteur 3 est fixé sur la calandre 16, par exemple par une ligne de soudure, de manière à s'étendre en regard de la première face ou base 7 du corps d'échangeur 2.

La deuxième plaque d'extrémité ou collecteur 4 est fixé sur la calandre 16, par exemple par une ligne de soudure, de manière à s'étendre en regard de la deuxième face ou base 8 du corps d'échangeur 2.

En fonctionnement, le premier fluide A est injecté dans l'échangeur thermique 1 via la première tubulure d'entrée 32 du premier collecteur 3. Le premier fluide A pénètre dans le corps d'échangeur 2 en passant à travers la première paroi d'entrée de fluide 71 dans le premier réseau de canaux 22. Le premier fluide A circule dans le premier réseau de canaux 22 et sort du corps d'échangeur 2 en passant à travers la première paroi de sortie de fluide 81. Le premier fluide A est extrait de l'échangeur 1 via la première tubulure de sortie 42 du deuxième collecteur 4.

Le deuxième fluide B est injecté dans l'échangeur thermique 1 via la deuxième tubulure d'entrée 43 du deuxième collecteur 4. Le deuxième fluide B pénètre dans le corps d'échangeur 2 en passant à travers la deuxième paroi d'entrée de fluide 83 dans le deuxième réseau de canaux 23. Le deuxième fluide B circule dans le deuxième réseau de canaux 23 et sort du corps d'échangeur 2 en passant à travers la deuxième paroi de sortie de fluide 73. Le deuxième fluide B est extrait de l'échangeur via la deuxième tubulure de sortie 33 du premier collecteur 3.

Pendant que le premier fluide A et le deuxième fluide B circulent dans le corps d'échangeur 2, un transfert de chaleur se produit entre les fluides à travers la paroi séparatrice 21. Le corps d'échangeur 2 s'étend sur une hauteur H selon la direction de circulation des fluides portée par l'axe Z.

*Déflecteurs demi-hélicoïdaux*

Afin d'allonger la distance parcourue par chacun des fluides A,B dans le corps d'échangeur 2, d'augmenter la vitesse des fluides A,B, et ainsi augmenter le transfert thermique total dans l'échangeur thermique 1, l'échangeur thermique présente la particularité qu'il comprend un premier déflecteur 24 agencé dans le premier réseau de canaux 22 de sorte à dévier la circulation du premier fluide A, et un deuxième déflecteur 25 agencé dans le deuxième réseau de canaux 23 de sorte à dévier la circulation du deuxième fluide B.

Plus précisément, le premier déflecteur 24 comprenant une première paroi de déflecteur demi-hélicoïdale, agencée à l'intérieur des canaux du premier réseau de canaux 22 et propre à guider la circulation du premier fluide A selon une première trajectoire hélicoïdale.

Le premier déflecteur 24 n'interfère pas avec le deuxième réseau de canaux 23 et donc ne modifie pas la trajectoire du deuxième fluide B. En d'autres termes, la première paroi de déflecteur comprend une pluralité d'éléments de parois agencés dans le premier réseau de canaux 22 selon une surface virtuelle hélicoïdale, de sorte à obstruer des canaux du premier réseau de canaux 22, mais ne comprend pas d'éléments dans le deuxième réseau de canaux 23. Cela permet de dévier l'écoulement du premier fluide A indépendamment de l'écoulement du deuxième fluide B, le deuxième fluide n'étant pas en contact avec le premier déflecteur 24 lors de son écoulement à travers le corps d'échangeur 2.

De même, le deuxième déflecteur 25 comprend une deuxième paroi de déflecteur demi-hélicoïdale, agencée à l'intérieur des canaux du deuxième réseau de canaux 23 et propre à guider la circulation du deuxième fluide B selon une deuxième trajectoire hélicoïdale. La deuxième trajectoire hélicoïdale est distincte de la première trajectoire hélicoïdale.

La deuxième paroi de déflecteur comprend une pluralité d'éléments de parois agencés dans le deuxième réseau de canaux 23 selon une surface virtuelle hélicoïdale, de sorte à obstruer des canaux du deuxième réseau de canaux 23, mais ne comprend pas d'éléments dans le premier réseau de canaux 22. Cela permet de dévier l'écoulement du deuxième fluide B indépendamment de l'écoulement du premier fluide A, le premier fluide A n'étant pas en contact avec le deuxième déflecteur 25 lors de son écoulement à travers le corps d'échangeur 2.

La forme demi-hélicoïdale des parois du premier déflecteur 24 et du deuxième déflecteur 25 permet avantageusement de réduire l'impact des déflecteurs 24,25 sur le gradient de vitesse d'écoulement des fluides dans les réseaux de canaux 22,23 respectifs, et donc d'éviter une décélération des fluides A, B. Il permet également d'accélérer l'écoulement des fluides A, B de manière contrôlée.

La surface virtuelle hélicoïdale selon laquelle les éléments de parois de la première paroi de déflecteur et de la deuxième paroi de déflecteur sont agencés est décrite mathématiquement dans l'espace tridimensionnel formé par le corps d'échangeur 2 par l'équation paramétrique suivante :

$$\begin{cases} x(u) = R\cos(u) \\ y(u) = R\epsilon\ \sin(u) \\ z(u) = cu = c\ \tan^{-1}\dfrac{y}{x} \end{cases}$$

où R est le rayon de la première ou de la deuxième base 7,8 du cylindre formé par le corps d'échangeur 2, u est un paramètre, et c est une constante telle que $2\pi c$ est le pas de la surface virtuelle hélicoïdale le long de l'axe principal Z, et donc le pas du déflecteur correspondant. On définit également le paramètre d'orientation $\varepsilon = 1$ pour une surface virtuelle hélicoïdale tournant dans le sens direct, et $\varepsilon = -1$ pour une surface virtuelle hélicoïdale tournant dans le sens opposé.

De manière complémentaire, dans un mode de réalisation où la calandre n'est pas cylindrique, le rayon R peut varier. Par exemple, le rayon R peut varier le long de l'axe principal Z, entre la première entrée de fluide et la première sortie de fluide. Cela permet d'adapter le déflecteur à la géométrie de la calandre.

Pour obtenir une demi-hélicoïde, le paramètre u s'étend sur un intervalle de longueur $\pi$, par exemple sur l'intervalle [0, $\pi$]. Cela permet que les éléments de paroi du déflecteur 24,25 correspondant ne soient pas situés directement au niveau de l'entrée ou de la sortie dans le corps d'échangeur 2, en particulier dans un mode de réalisation ou les entrées et sorties respectives ne sont pas alignées selon la direction portée par l'axe Z, comme représenté. Contrairement à une surface formant une hélicoïde complète, l'utilisation d'une surface demi-hélicoïdale permet de ne pas diviser le volume de l'échangeur thermique 1 en deux espaces distincts pour chaque réseau de canaux 22,23. Ainsi, le volume délimité par chaque réseau de canaux 22,23 peut être entièrement exploité, c'est-à-dire que les fluides A,B sont déviés et occupent tout l'espace disponible au sein de la calandre 16 lors de leur passage à travers l'échangeur thermique 1.

Le système d'équation donné ci-dessus permet de définir une paroi de déflecteur demi-hélicoïdale s'étendant autour de l'axe Z. De manière plus générale, le premier déflecteur 24 et/ou du deuxième déflecteur 25 peut s'étendre autour d'un axe principal distinct de l'axe Z, typiquement un axe parallèle à l'axe Z, ou encore avec un axe aligné avec les tubulures de sortie 33,42 ou les tubulures d'entrée 32,43.

De préférence, la première paroi de déflecteur demi-hélicoïdale a un axe principal, et la deuxième paroi de déflecteur demi-hélicoïdale a pour axe l'axe principal. Dans le mode de réalisation illustré, l'axe principal est l'axe Z. Selon un autre mode de réalisation non illustré, la première paroi de déflecteur demi-hélicoïdale peut avoir un axe principal orthogonal à l'axe principal de la deuxième paroi de déflecteur demi-hélicoïdale. Une telle configuration peut être adaptée selon l'environnement dans lequel l'échangeur thermique 1 est intégré, notamment dans le cadre d'un échangeur à contre-courant (ou « *cross-flow* » selon la terminologie anglais couramment utilisée).

La première paroi de déflecteur 24 demi-hélicoïdale est caractérisée par le premier paramètre d'orientation $\varepsilon_1$ et la deuxième paroi de déflecteur 25 demi-hélicoïdale est caractérisée par le deuxième paramètre d'orientation $\varepsilon_2$. Le premier et le deuxième paramètres d'orientation peuvent avoir la même valeur. Dans ce cas, les deux formes hélicoïdales sont orientées dans le même sens, et les deux fluides effectuent des rotations dans le même sens au sein du corps d'échangeur 2.

De préférence, la première paroi de déflecteur demi-hélicoïdale est orientée dans un premier sens d'enroulement autour de l'axe principal Z, et la deuxième paroi de déflecteur demi-hélicoïdale est orientée dans un deuxième sens d'enroulement autour de l'axe principal Z, le deuxième sens d'enroulement étant opposé au premier sens d'enroulement. En d'autres termes, le premier et le deuxième paramètres d'orientation sont opposés. Par exemple, on a $\varepsilon_1 = 1$ pour la première paroi de déflecteur demi-hélicoïdale, et $\varepsilon_2 = -1$ pour la deuxième paroi de déflecteur demi-hélicoïdale.

Ainsi, le premier fluide A tourne dans un premier sens de rotation, tandis que le deuxième fluide B tourne dans un deuxième sens de rotation opposé au premier sens de rotation. La déviation induite par les déflecteurs 24,25 respectifs permet d'augmenter la surface de la paroi séparatrice 21 où les fluides A,B se croisent à contre-courant en augmentant la distance parcourue par les fluides A,B au sein de l'échangeur thermique 1, et augmente ainsi la performance thermique de l'échangeur thermique 1. En d'autres termes, pour forcer les écoulements des fluides A,B à être complétement en vis-à-vis et dans des sens opposées, il est possible de faire évoluer le sens de rotation de la spire en changeant le signe du paramètre d'orientation $\varepsilon$. On peut donc avoir un sens montant/descendant horaire ou anti-horaire.

La première paroi de déflecteur demi-hélicoïdale présente un premier pas P1, et la deuxième paroi de déflecteur demi-hélicoïdale présente un deuxième pas P2. De préférence, le premier pas $P_1 = 2\pi c_1$ et le deuxième pas $P_2 = 2\pi c_2$ sont

différents. Utiliser des pas différents pour les deux fluides est particulièrement avantageux lorsque le premier fluide A et le deuxième fluide B ont des propriétés physiques différentes. En effet, la vitesse du fluide dévié par un déflecteur demi-hélicoïdal de pas réduit est considérablement augmentée, pour un débit d'entrée constant, car la section de passage est réduite. Le fluide est ainsi accéléré, et parcourt une distance plus élevée pour un même temps de passage dans l'échangeur thermique 1. A l'inverse, l'utilisation d'un pas plus important permet de ne pas augmenter significativement la distance parcourue par le fluide, et donc a un impact plus faible sur la modification de la vitesse du fluide au cours de son écoulement dans le corps d'échangeur 2.

Plus généralement, il est intéressant d'utiliser un déflecteur différent dans chaque réseau de canaux 22,23 indépendant. Cela permet de gérer précisément la vitesse relative entre le premier fluide A circulant dans le premier réseau de canaux 22 et le deuxième fluide B circulant dans le deuxième réseau de canaux 23 de l'échangeur thermique 1 et permet d'augmenter la performance thermique de ce dernier. En effet, cela permet de gérer très précisément le coefficient d'échange local au sein du corps d'échangeur 2 en modifiant localement la vitesse du fluide, puisque la vitesse de chaque fluide peut être différente entre chaque canal du réseau de canaux 22,23. Selon le premier pas et le deuxième pas choisis, le premier fluide A va effectuer un nombre de passes ou rotations X lorsque le deuxième fluide va effectuer un nombre de rotation Y, avec X inférieur, égal ou supérieur à Y, selon la valeur relative des pas.

Le libre choix des pas P1,P2 de la première paroi de déflecteur et de la deuxième paroi de déflecteur, respectivement, est un atout important car le coefficient d'échange global peut être exprimé comme la combinaison des différents coefficients d'échange résistifs locaux, dépendant du coefficient de transfert thermique de film externe et interne (c'est-à-dire pour chacun des fluides) ou coefficient d'échange. En modifiant la vitesse du fluide, il est possible d'augmenter considérablement son coefficient d'échange et donc d'augmenter le coefficient d'échange global sans impacter l'autre fluide, c'est-à-dire sans perte de charge excessive. Cela permet d'obtenir plus précisément le coefficient d'échange global souhaité et donc de mieux dimensionner l'échangeur thermique 1.

De préférence, le premier pas $P_1$ est au moins deux fois supérieur au deuxième pas $P_2$. Néanmoins cet exemple n'est pas limitatif le rapport entre le premier pas $P_1$ et le deuxième pas $P_2$ peut être facilement adapté aux propriétés des fluides A, B.

Un exemple d'échangeur 1 pour un flux asymétrique est le suivant : le premier fluide A est un mélange chaud d'un liquide aqueux et d'un gaz, de masse volumique égale à 860 kg/m$^3$, avec une température d'entrée de 156°C, et une pression de 80 bar, et le deuxième fluide B est de l'eau froide, avec une température d'entrée de 40°C et une pression de 5 bar. Le débit du premier fluide A est de 44 kg/h, et est très inférieur au débit du deuxième fluide B, qui est de 1393 kg/h. Ainsi, le premier fluide A est très refroidi au cours de son passage dans l'échangeur, et a en sortie de l'échangeur 1 une température de 50°C, tandis que le deuxième fluide B ne subit pas une variation de température importante, et a en sortie une température de 44°C.

Le premier réseau de canaux 22 étant indépendant du deuxième réseau de canaux 23, il est possible d'utiliser des parois de déflecteurs 24,25 imbriqués présentant des pas différents, puisque les surfaces imbriquées n'interfèrent avec le passage du fluide que dans leurs réseaux de canaux respectifs. Un exemple de réalisation sera détaillé par la suite.

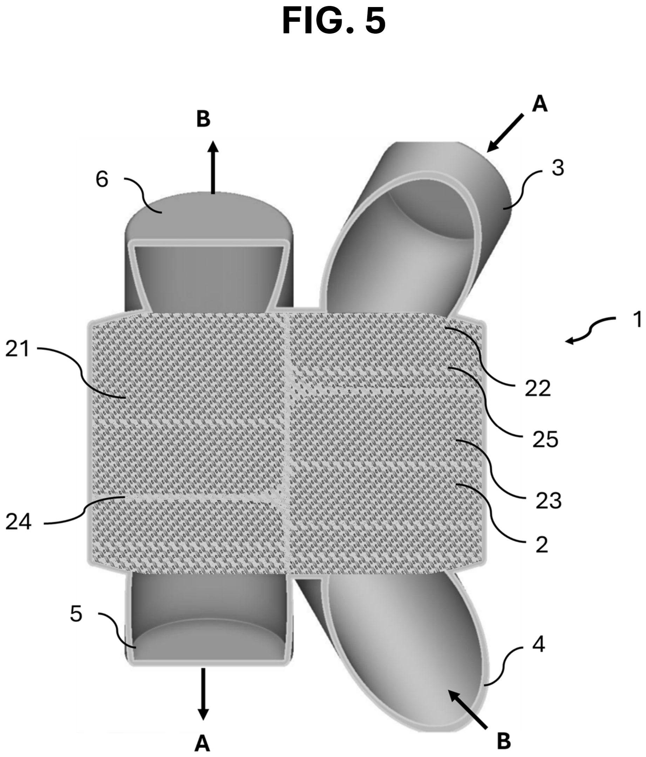

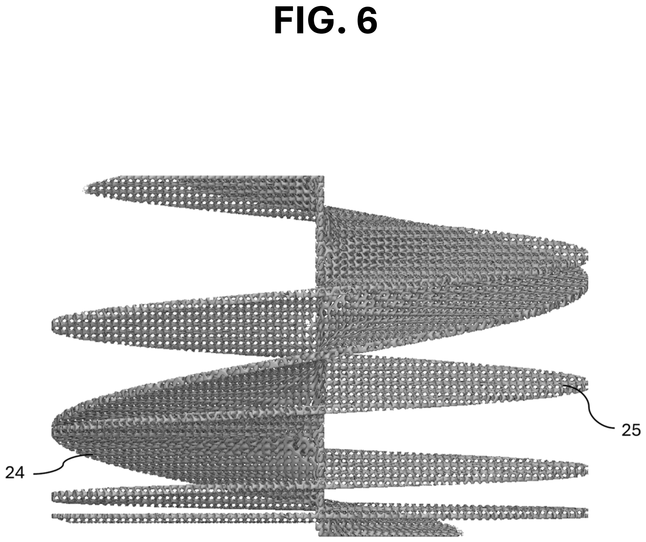

En référence aux figures 5 et 6, la première paroi de déflecteur 24 demi-hélicoïdale peut présenter un pas variable selon la hauteur. En d'autres termes, la première paroi de déflecteur demi-hélicoïdale a un premier axe Z et s'étend sur une première longueur le long du premier axe Z, et la première paroi de déflecteur demi-hélicoïdale présente un premier pas qui varie le long du premier axe sur la première longueur. Dans ce cas, elle est caractérisée par une fonction $c_1(z)$ variant selon l'axe Z.

De manière alternative ou complémentaire, la deuxième paroi de déflecteur 25 demi-hélicoïdale peut présenter un pas variable selon la hauteur, et être caractérisée par une fonction $c_2(z)$. En d'autres termes, la deuxième paroi de déflecteur demi-hélicoïdale a un deuxième axe Z' et s'étend sur une deuxième longueur le long du deuxième axe Z', et la deuxième paroi de déflecteur demi-hélicoïdale présente un deuxième pas qui varie sur la deuxième longueur. Cela permet de gérer précisément la vitesse relative entre l'entrée et la sortie de l'échangeur thermique 1 et permet d'augmenter sa performance thermique. Cela permet de faire varier la section de passage apparente le long du trajet du fluide A,B au sein du corps d'échangeur 2, et donc de faire varier la vitesse du fluide A,B pendant son passage dans l'échangeur 1. En effet, en diminuant le pas de la demi-hélicoïde, la section de passage du fluide sera plus faible et donc le fluide accélèrera. A l'inverse, en augmentant le pas, la section de passage du fluide sera plus importante et donc le fluide ralentira.

Cela est particulièrement avantageux dans le cas d'une évaporation ou d'une condensation du fluide A, B a lieu à l'intérieur de l'échangeur thermique 1. Cela permet de compenser l'évolution des propriétés physiques du fluide A, B de manière localisée, et ainsi limiter les pertes de charges et/ou augmenter le coefficient d'échange.

Par exemple, le pas p1(z) varie en augmentant entre la première entrée de fluide 32 et la première sortie de fluide 42. Cela est adapté en cas de dilatation du premier fluide A le long de son parcours dans l'échangeur thermique. De manière alternative, le pas p1(z) varie en diminuant entre la première entrée de fluide 32 et la première sortie de fluide 42. Cela est adapté en cas d'une contraction du premier fluide A le long de son parcours dans l'échangeur thermique, liée à un refroidissement.

Le pas p2(z) de la deuxième paroi de déflecteur peut également être constant, croissant, ou décroissant entre la deuxième entrée de fluide 43 et la deuxième sortie de fluide 33.

L'utilisation d'un pas p1(z), p2(z) variable est particulièrement avantageux lorsqu'un changement d'état du fluide respectif a lieu au sein de l'échangeur 1. En effet, cela permet de réduire ou d'augmenter la section de passage en fonction de l'évaporation (transition liquide vers vapeur), et donc de dilatation, ou de la condensation (transition vapeur vers liquide), de donc de compression, du fluide A, B, et de maitriser plus précisément la vitesse du fluide A, B. En effet, lors d'un échange thermique, les propriétés du fluide A,B évoluent en fonction de la température et de la pression. Ils peuvent par exemple prendre plus ou moins de volume dans le cas d'une évaporation ou d'une condensation. Ainsi il est parfois nécessaire d'accélérer le fluide A,B (dans le cas d'une condensation par exemple) ou de le ralentir (dans le cas d'une évaporation) pour optimiser l'échange thermique et/ou la perte de charge.

Dans un mode de réalisation, les première et deuxième parois de déflecteur demi-hélicoïdale 24,25 peuvent avoir des pas différents et des sens de rotation opposés. Ainsi l'écoulement sera différent entre les deux fluides A,B. Ce mode de réalisation peut servir à modifier le transfert thermique en changement localement le croisement des fluides A,B.

L'épaisseur de la première paroi de déflecteur peut être constante ou variable selon la hauteur le long du premier axe Z. Cela permet également de modifier la section de passage du premier fluide A à travers le corps d'échangeur 2.

De manière alternative ou complémentaire, l'épaisseur de la deuxième paroi de déflecteur peut être constante ou variable selon la hauteur le long du deuxième axe. Cela permet également de modifier la section de passage du deuxième fluide B à travers le corps d'échangeur 2.

*Structure en treillis*

Comme expliqué précédemment, la présence d'une paroi séparatrice 21 définissant deux réseaux de canaux distincts et indépendants est nécessaire à l'utilisation de deux parois de déflecteurs 24,25 demi-hélicoïdales. Typiquement, le corps d'échangeur 2 intègre une structure en treillis (ou « *lattice* » selon la terminologie anglosaxonne). En d'autres termes, la paroi séparatrice comprend une structure en treillis, de sorte que le premier réseau de canaux et le deuxième réseau de canaux sont imbriqués l'un dans l'autre. Ainsi, il est possible de définir les déflecteurs 24,25 seulement à l'intérieur des canaux respectifs, ce qui permet de modifier indépendamment le premier réseau de canaux 22 et le deuxième réseau de canaux 23.

De préférence la paroi séparatrice 21 présente une surface minimale triplement périodique (« triply periodic minimal surface » ou TPMS en anglais). Une telle surface permet de délimiter les deux réseaux de canaux distincts et constamment en contact, ce qui augmente la surface de contact et donc le transfert thermique pour un volume donné. L'échangeur thermique 21 peut ainsi être à la fois compact et performant. Une paroi séparatrice 21 définie ainsi permet de minimiser la courbure locale moyenne et donc de ne pas entrainer de pertes de charges indésirables ou des chutes de pression.

Différentes structures tri-périodiques peuvent être utilisées pour définir la paroi séparatrice 21. Parmi d'autres, on peut par exemple citer la surface Schwarz-P, définie par l'équation :

$$f_{SP}(x,y,z) = \cos(x) + \cos(y) + \cos(z) = K,$$

avec K constante, ou la surface Schwarz-D définie par l'équation :

$$f_{SD}(x,y,z) = \cos(x)\cos(y)\cos(z) - \sin(x)\sin(y)\sin(z) = K,$$

avec K constante.

Dans un autre mode de réalisation la paroi séparatrice 21 est en forme de gyroïde. La forme de gyroïde de la paroi séparatrice 21 permet de maximiser la surface d'échange entre les deux fluides, tout en limitant les pertes de charge.

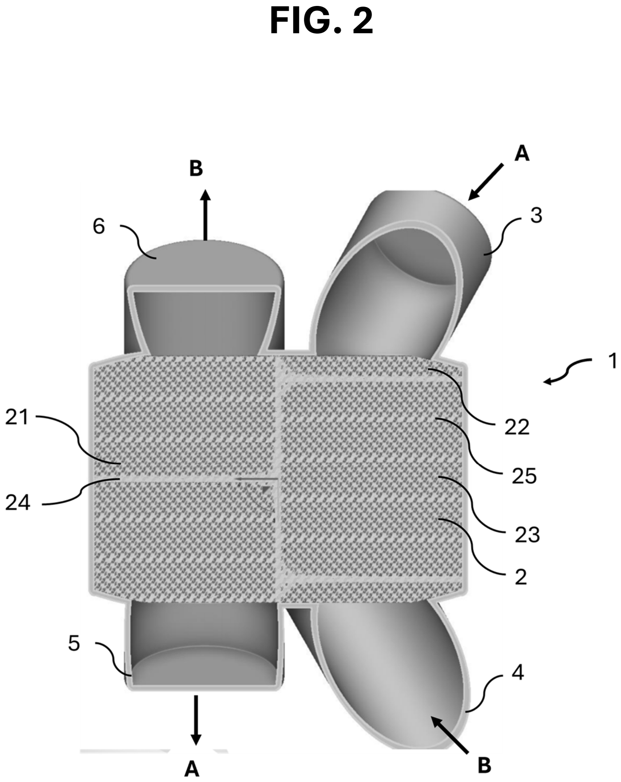

Dans le cas du corps d'échangeur 2 illustré sur la figure 2, le gyroïde est une courbe tridimensionnelle, définie par l'équation :

$$f_{G}(x,y,z) = a \times \cos(x) \times \sin(y) + b \times \cos(y) \times \sin(z) + c \times \cos(z) \times \sin(x) = K,$$

avec a, b et c des coefficients non-nuls, et K une constante. Par exemple, chacun des coefficients a, b et c est égal à 1.

Dans ces trois exemples, la paroi séparatrice 21 est par exemple délimitée entre une surface supérieure d'équation $f_i(x,y,z) = K$, et une surface inférieure d'équation $f_i(x,y,z) = -K$, avec K constante. La paroi séparatrice 21 a alors une épaisseur égale à 2K.

La paroi séparatrice 21 en forme de surface Schwarz-P présente une plus forte perméabilité et un plus faible coefficient de trainée que les autres surfaces, pour une même épaisseur de paroi de déflecteur. Cependant, cette forme de surface présente également un coefficient de friction plus élevé, et donc entraine des vitesses des fluides plus faibles dans l'échangeur. La paroi séparatrice 21 de fore Schwarz-D permet d'atteindre une densité d'énergie plus importante pour des fluides de forte masse volumique et une meilleure efficacité du transfert thermique pour des régimes laminaires, et présente de bonne propriétés de convection. Le choix de la forme de paroi séparatrice 21 peut également dépendre du nombre de Reynolds de l'écoulement des fluides dans l'échangeur 1, et donc de la masse volumique et de la viscosité des fluides A,B utilisés. La taille des cellules formant chacun des réseaux de canaux peut être adaptée pour réduire le gradient de pression de fluides dans leurs canaux respectifs. La paroi séparatrice 21 de forme gyroïde offre un bon compromis pour des écoulements avec un nombre de Reynolds plus élevé (Re > 75) et pour des parois plus épaisses.

Notamment, la paroi séparatrice 21 en forme de gyroïde peut présenter une épaisseur variable selon la direction d'écoulement ou selon la direction portée par l'axe Z. L'équation ci-dessus peut être modifiée de sorte que la section des canaux de chaque réseau de canaux 22,23 varie indépendamment selon une direction. Dans ce cas, la paroi séparatrice satisfait l'équation

$$F\,(x,\,y,\,z) + a \times \cos\,(x) \times \sin\,(y) + b \times \cos\,(y) \times \sin\,(z) + c \times \cos\,(z) \times \sin\,(x) = K$$

où F est une fonction telle que pour x et y fixés, F est strictement monotone. F est considéré comme strictement monotone, si pour tout z1 < z2, F (z1) < F(z2), ou pour tout z1 < z2, F (z1) > F(z2), dans le volume occupé par le corps d'échangeur. Typiquement, la fonction F peut être une fonction linéaire de x, y et/ou z, par exemple de la forme :

$$F\,(x,\,y,\,z) = A \times x + B \times y + C \times z$$

où A, B et C sont des coefficients prédéfinis, parmi lesquels au moins le coefficient C est non-nul. Comme précédemment, la paroi séparatrice 21 peut être délimitée entre une surface supérieure d'équation $f_G(x,y,z) = K - F(x,y,z)$, et une surface inférieure d'équation

$$f_G(x,y,z) = -K - F(x,y,z),$$

avec K constante. La paroi séparatrice 21 a une épaisseur égale à 2K, les surfaces supérieure et inférieure s'étendant en parallèle.

De même, la parois séparatrice 21 en forme de Schwarz-G ou en forme de Schwarz-P peut présenter une épaisseur variable en modifiant l'équation correspondante de manière similaire.

La pluralité d'éléments de paroi du premier déflecteur 24 sont insérés dans le premier réseau de canaux 22 formé par la paroi séparatrice 21, et la pluralité d'éléments de paroi du deuxième déflecteur 25 sont insérés dans le deuxième réseau de canaux 23. Pour cela, la pluralité d'éléments de paroi peut avoir une forme complémentaire à la géométrie des réseaux de canaux respectifs.

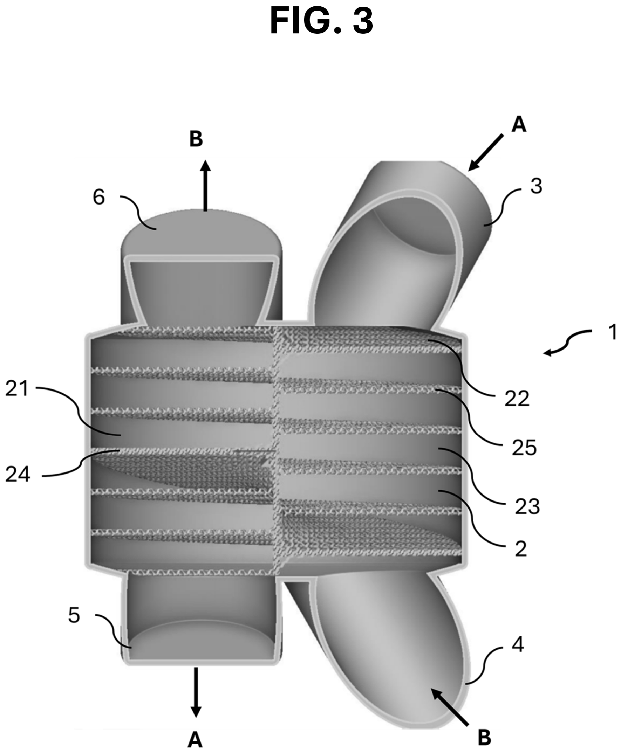

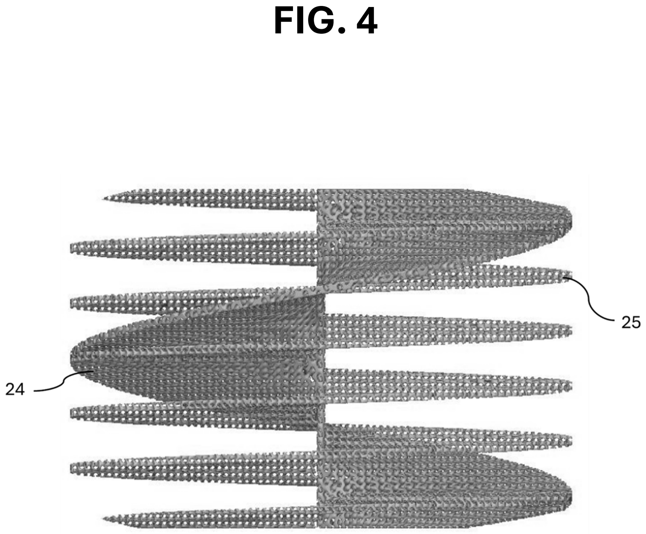

Comme visible sur la figure 3, dans laquelle la paroi séparatrice 21 n'est pas représentée, et sur la figure 4, le premier déflecteur 24 et le deuxième déflecteur 25 sont portés par la surface virtuelle hélicoïdale et présentent une structure perforée. En particulier, les éléments de paroi de chacun des déflecteurs 24,25 s'enchevêtrent sans se toucher, en ce qu'ils sont séparés par la paroi séparatrice 21. Le premier déflecteur 24 n'interfère pas avec le deuxième réseau de canaux 23, et le deuxième déflecteur 25 n'interfère pas avec le premier réseau de canaux 22.

*Autres modes de réalisation envisagés*

Dans un mode de réalisation non couvert par l'invention, la pluralité d'éléments de parois du premier déflecteur 24 et/ou du deuxième déflecteur 25 peuvent s'étendre selon des plans. Typiquement, des plans parallèles, par exemple normaux à l'axe Z. Cela permet également de dévier l'écoulement du premier (respectivement deuxième) fluide dans le premier (respectivement deuxième) réseau de canaux 22,23.

Dans un autre mode de réalisation non couvert par l'invention, l'échangeur thermique 1 comprend un seul déflecteur agencé dans le premier réseau de canaux 22, de sorte que seul le premier fluide A est dévié au cours de sa circulation dans le corps d'échangeur 2 par le déflecteur unique, le deuxième fluide B s'écoulant dans les canaux du deuxième réseau de canaux 23 entre la deuxième entrée de fluide 32 et la deuxième sortie de fluide 33.

La présente invention ne se limite pas à un corps d'échangeur 2 cylindrique. Dans d'autres modes de réalisation, le corps d'échangeur 2 pourrait être délimité par un parallélépipède rectangle, par exemple un pavé ou un cube, présentant six faces ou surfaces planes. Dans ce cas, les surfaces virtuelles demi-hélicoïdale selon lesquelles sont agencés les éléments des premières et deuxième paroi de déflecteur demi-hélicoïdales sont tronquées pour correspondre aux dimensions du corps d'échangeur 2.

De plus, la présente invention ne se limite pas à un écoulement contre-courant tel qu'illustré sur la figure 1.

De manière alternative, la tubulure 33 peut être une tubulure d'entrée du deuxième fluide B et la tubulure 43 une tubulure de sortie du deuxième fluide B. Dans ce mode de réalisation, les déflecteurs 24,25 présentent des sens de rotation opposés, de sorte que les fluides A,B sont à contre-courant le long de la paroi séparatrice. La position des entrées de fluide 32,43 et des sorties de fluide 42,33 sur le corps d'échangeur 2 dépend des contraintes d'intégration de l'échangeur thermique 1 et des performances souhaitées.

De manière alternative, les tubulures d'entrée et de sortie 33,43 du deuxième fluide B peuvent être agencées sur des surfaces latérales du corps d'échangeur 2. Dans ce mode de réalisation, le deuxième déflecteur 25 peut avoir une forme hélicoïdale portée par un axe ne s'étendant pas selon l'axe Z, par exemple transversalement à l'axe Z ou passant par la tubulure d'entrée et la tubulure de sortie.

Le nombre de spires des formes demi-hélicoïdales de chacun des déflecteurs 24,25 peut varier, de sorte que chacun des fluides A, B peut effectuer un nombre variable de rotation au sein du corps d'échangeur 2.

Le corps d'échangeur 2 (incluant la paroi séparatrice 21 et les parois 71, 81, 73, 83) peut être formé en une seule pièce unique de matériau, par une technique de fabrication additive ou par une technique de fonderie.

De préférence, la paroi séparatrice, la première paroi de déflecteur demi-hélicoïdale et la deuxième paroi de déflecteur demi-hélicoïdale sont obtenues par un procédé de fabrication additive. La technique de fabrication additive peut être une technique de fabrication additive sur lit de poudre (par exemple une technique de fusion sélective par laser - appelée SLM ou « Selective Laser Melting » en anglais), ou une technique de fabrication additive par dépôt de poudre ou de fil (par exemple une technique de dépôt sous énergie concentrée - appelée DED ou « Directed Energy Deposition » en anglais), ou une technique de fabrication additive par apport de fil et laser (appelée WLAM ou « Wire and Laser Additive Manufacturing »). Le corps d'échangeur 2 peut également être obtenu par un procédé de soudage de feuillard ou de fine tôle, par exemple le procédé AMW (« Additive Micro Welding ») proposé par INETYX ® s'appuyant sur le principe de micro-soudure de bandes métalliques couche par couche.

Le procédé de fabrication additive permet avantageusement de réaliser simultanément la paroi séparatrice 21 formant le corps d'échangeur 2 et les éléments de parois suivant la forme hélicoïdale de chacun des déflecteurs 24,25.

Le matériau du corps d'échangeur 2 peut être matériau présentant une bonne conductivité thermique, c'est-à-dire une conductivité thermique typiquement comprise entre 100 et 400 W/mK (watts par mètre-kelvin). Toutefois, le matériau utilisé peut présenter une moins bonne conductivité thermique, par exemple comprise entre 10 et 100 W/mK, mais avoir des propriétés mécaniques adaptées à l'utilisation pour échangeur, c'est-à-dire résister aux fluides en présence, notamment résister à la corrosion.

Le matériau est de préférence un métal, par exemple le titane, ou un alliage métallique, par exemple un acier au carbone (c'est-à-dire un acier dont le principal composant d'alliage est le carbone dont la teneur est comprise entre 0,12 et 2,0 %, les autres éléments d'alliages étant en quantité très faible) ou un acier austénitique (c'est-à-dire un acier caractérisé par une structure moléculaire cubique à faces centrées, comme par exemple un acier inoxydable obtenu avec 18 % de chrome et 8 % de nickel), ou un acier duplex (c'est-à-dire un acier inoxydable ayant une structure biphasée composée de ferrite complétée de 40 à 60 % d'austénite, et contenant typiquement au moins 20% de chrome, du nickel, du molybdène, de l'azote et facultativement du cuivre et/ou du tungstène) ou un acier super duplex (contenant typiquement entre 25% et 30% de chrome, entre 6 et 8% de nickel, du molybdène, de l'azote et facultativement du cuivre et/ou du tungstène) ou encore un alliage à base de nickel, d'aluminium ou de titane. Alternativement, le matériau du corps d'échangeur 2 peut être un polymère, un mélange de polymères ou un matériau composite (par exemple un polymère chargé). De préférence, le matériau utilisé est un acier inoxydable (c'est-à-dire un acier comportant moins de 1,2 % de carbone avec plus de 10,5 % de chrome). Ce matériau présente de bonnes propriétés mécaniques, est relativement peu couteux et est largement disponible, ce qui facilite la production de l'échangeur thermique 1.

La présente invention peut être avantageusement utilisée dans un ensemble d'échangeurs. Pour ce faire, il est possible d'empiler un nombre variable d'échangeurs thermiques 1 en fonction des besoins. Dans ce cas, la première face ou face supérieure 7 d'un échangeur thermique est raccordée à la deuxième face ou face inférieure 8 d'un autre échangeur thermique adjacent dans l'empilement de sorte que le premier fluide A et le deuxième fluide B circulent successivement à travers les échangeurs thermiques de l'empilement.

**Revendications**

1. Echangeur thermique (1) comprenant un corps d'échangeur (2), le corps d'échangeur (2) comprenant une première entrée de fluide (32), une deuxième entrée de fluide (43), une première sortie de fluide (42) et une deuxième sortie de fluide (33), et une paroi séparatrice (21) séparant un premier réseau de canaux (22) pour une circulation d'un premier fluide (A) depuis la première entrée (32) jusqu'à la première sortie (42), et un deuxième réseau de canaux (23) pour une circulation d'un deuxième fluide (B) depuis la deuxième entrée (43) jusqu'à la deuxième sortie (33), l'échangeur thermique (1) étant **caractérisé en ce qu'**il comprend en outre un premier déflecteur (24) comprenant une première paroi de déflecteur demi-hélicoïdale, agencée à l'intérieur des canaux du premier réseau de canaux (22) et propre à guider la circulation du premier fluide (A) selon une première trajectoire hélicoïdale, et un deuxième déflecteur (25) comprenant une deuxième paroi de déflecteur demi-hélicoïdale, agencée à l'intérieur des canaux du deuxième réseau de canaux (23) et propre à guider la circulation du deuxième fluide (B) selon une deuxième trajectoire hélicoïdale.

2. Echangeur thermique selon la revendication 1, dans lequel la première paroi de déflecteur demi-hélicoïdale a un axe principal (Z), et dans lequel la deuxième paroi de déflecteur demi-hélicoïdale a pour axe l'axe principal (Z).

3. Echangeur thermique selon la revendication 2, dans lequel la première paroi de déflecteur demi-hélicoïdale est orientée dans un premier sens d'enroulement autour de l'axe principal (Z), et dans lequel la deuxième paroi de déflecteur demi-hélicoïdale est orientée dans un deuxième sens d'enroulement autour de l'axe principal (Z), le deuxième sens d'enroulement étant opposé au premier sens d'enroulement.

4. Echangeur thermique selon l'une quelconque des revendications 1 à 3, dans lequel la première paroi de déflecteur demi-hélicoïdale présente un premier pas (P1), et dans lequel la deuxième paroi de déflecteur demi-hélicoïdale présente un deuxième pas (P2), le deuxième pas (P2) étant différent du premier pas (P1).

5. Echangeur thermique selon l'une quelconque des revendications 1 à 4, dans lequel la première paroi de déflecteur demi-hélicoïdale a un premier axe (Z) et s'étend sur une première longueur (H) le long du premier axe (Z), et la première paroi de déflecteur demi-hélicoïdale présente un premier pas (p1(z)) qui varie le long du premier axe (Z) sur la première longueur (H).

6. Echangeur thermique selon l'une quelconque des revendications 1 à 5, dans lequel la deuxième paroi de déflecteur demi-hélicoïdale a un deuxième axe (Z) et s'étend sur une deuxième longueur (H) le long du deuxième axe (Z), et la deuxième paroi de déflecteur demi-hélicoïdale présente un deuxième pas (p2(z)) qui varie sur la deuxième longueur.

7. Echangeur thermique selon l'une quelconque des revendications 1 à 6, dans lequel la paroi séparatrice (21) comprend une structure en treillis, de sorte que le premier réseau de canaux (22) et le deuxième réseau de canaux (23) sont imbriqués l'un dans l'autre.

8. Echangeur thermique selon l'une quelconque des revendications 1 à 7, dans lequel la paroi séparatrice (21) présente une surface minimale triplement périodique, par exemple en forme de gyroïde.

9. Echangeur thermique selon l'une quelconque des revendications 1 à 8, dans lequel le corps d'échangeur (2) est de forme cylindrique s'étendant entre une première base (7) et une deuxième base (8), et dans lequel la première entrée (32) et la deuxième sortie (33) sont agencées sur la première base, et la première sortie (42) et la deuxième entrée (43) sont agencées sur la deuxième base (8).

10. Echangeur thermique selon l'une quelconque des revendications 1 à 9, dans lequel la paroi séparatrice (21), la première paroi de déflecteur demi-hélicoïdale et la deuxième paroi de déflecteur demi-hélicoïdale sont obtenues par un procédé de fabrication additive.

# FIG. 1

# FIG. 2

# FIG. 3

# FIG. 4

# FIG. 5

# FIG. 6

Europäisches
Patentamt

European
Patent Office

Office européen
des brevets

**RAPPORT DE RECHERCHE EUROPEENNE**

*Numéro de la demande*

**EP 25 22 6671**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 287 730 A1 (BOSCH TERMOTEKNIK ISITMA VE KLIMA SANAYI TICARET ANONIM SIRKETI [TR]) 28 février 2018 (2018-02-28) * figures 1-4 * ----- | 1-10 | INV. F28F7/02 F28D7/02 B33Y80/00 F28F9/22 B33Y10/00 |
| A | US 11 112 183 B2 (HAMILTON SUNDSTRAND CORP [US]) 7 septembre 2021 (2021-09-07) * figures 1-5 * ----- | 1-10 | |
| A | CN 107 300 333 A (SHANGHAI LANBIN PETROCHEMICAL EQUIPMENT CO LTD ET AL.) 27 octobre 2017 (2017-10-27) * figures 1-5 * ----- | 1 | |
| A | US 1 833 876 A (MCGRATH WILLIAM H) 24 novembre 1931 (1931-11-24) * figures 1-8 * ----- | 1 | |

**DOMAINES TECHNIQUES RECHERCHES (IPC)**

**F28D**

Le présent rapport a été établi pour toutes les revendications

| Lieu de la recherche | Date d'achèvement de la recherche | Examinateur |
|---|---|---|
| Munich | 16 avril 2026 | Bloch, Gregor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 25 22 6671

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2026

| Document brevet cité au rapport de recherche | | Date de publication | Membre(s) de la famille de brevet(s) | | Date de publication |
|---|---|---|---|---|---|
| EP 3287730 | A1 | 28-02-2018 | AUCUN | | |
| US 11112183 | B2 | 07-09-2021 | EP | 3193125 A1 | 19-07-2017 |
| | | | US | 2017205146 A1 | 20-07-2017 |
| | | | US | 2021372706 A1 | 02-12-2021 |
| | | | US | 2023288143 A1 | 14-09-2023 |
| CN 107300333 | A | 27-10-2017 | AUCUN | | |
| US 1833876 | A | 24-11-1931 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101363694 A